# FASCICULE DE BREVET EUROPEEN

(11) **EP 1 196 694 B1**
(45) Date de publication et mention de la délivrance du brevet: **17.09.2003**
(21) Numéro de dépôt: 00953236.7
(22) Date de dépôt: 13.07.2000
(51) Int. Cl.: F15B 15/10, F15B 15/08, F16H 19/00, F15B 15/02

(54) **SYSTEME DE DEPLACEMENT PNEUMATIQUE**
PNEUMATISCHES STELLSYSTEM
PNEUMATIC DISPLACEMENT SYSTEM

(30) Priorité: 15.07.1999 FR 9909362
(43) Date de publication de la demande: 17.04.2002
(73) Titulaire: UNIVERSITE JOSEPH FOURIER, F-38041 Grenoble Cédex (FR)
(72) Inventeur: CINQUIN, Philippe, F-38700 La Tronche (FR); TROCCAZ, Jocelyne, F-38320 Eybens (FR)
(74) Mandataire: de Beaumont, Michel
(86) Numéro de dépôt international: FR0002041
(87) Numéro de publication internationale: WO01006132

(56) Documents cités:
- EP-A- 0 647 786
- FR-A- 2 560 102
- US-A- 4 664 232
- US-A- 5 222 428
- US-A- 5 860 333
- PATENT ABSTRACTS OF JAPAN vol. 014, no. 355 (M-1004), 31 juillet 1990 (1990-07-31) & JP 02 125102 A (OLYMPUS OPTICAL), 14 mai 1990 (1990-05-14)
- TONDU B ET AL: "THEORIE D'UN MUSCLE ARTIFICIEL PNEUMATIQUE ET APPLICATION A LA MODELISATION DU MUSCLE ARTIFICIEL DE MCKIBBEN THEORY OF AN ARTIFICIAL PNEUMATIC MUSCLE AND APPLICATION TO THE MODELLING OF MCKIBBEN ARTIFICIAL MUSCLE" COMPTES RENDUS DE L ACADEMIE DES SCIENCES: SERIE II: MECANIQUE-PHYSIQUE-CHIMIE-ASTRONOMIE,FR,ED ITIONS SCIENTIFIQUES & MEDICALES ELSEVIER, vol. 320, no. 3, 2 février 1995 (1995-02-02), pages 105-114, XP000497922 ISSN: 1251-8069 cité dans la demande

## Description

La présente invention concerné un système de déplacement pneumatique, conformément au préambule de la revendication 1. Un tel système est connu du document EP 647 786.

On connaît des systèmes pneumatiques d'actionnement, couramment appelés "muscles artificiels" constitués de boudins gonflables insérés dans des tresses de protection, tels que le muscle artificiel se contracte ou se dilate selon que sa pression de fluide interne augmente ou diminue. De tels muscles artificiels sont, par exemple, décrits par B. Tondu et P. Lopez dans "Compte Rendu de l'Académie des Sciences", t. 320, PP 105-114, 1995. Notamment, on a mis au point de tels "muscles" qui peuvent avoir une longueur de l'ordre de la dizaine de centimètres et un diamètre de l'ordre de 1 à 3 cm et qui fournissent une contraction de l'ordre de 10 à 20 % de leur longueur quand leur pression interne varie de 1a pression atmosphérique à une pression 4 à 5 fois plus grande. Ces systèmes présentent l'avantage d'un excellent rapport puissance/poids. Par exemple un muscle artificiel d'un poids de l'ordre de 50 à 100 grammes peut exercer une force de l'ordre de 1000 newtons, c'est-à-dire, par exemple, soulever une charge de l'ordre de 100 kg. Ces systèmes d'actionnement sont bien adaptés à un fonctionnement en milieu hospitalier car ils sont propres, non polluants et se prêtent à des opérations de désinfection/stérilisation. De plus, ils utilisent seulement des sources d'électricité basse tension de faible puissance pour commander des électrovannes. En outre, des sources d'air comprimé sont couramment disponibles en milieu hospitalier.

Toutefois, ces systèmes présentent un inconvénient lié à leur faible débattement qui, comme on l'a indiqué, est de l'ordre de seulement 10 à 20 % entre leur position de repos et leur position active.

La présente invention vise à prévoir un système de déplacement pneumatique présentant les mêmes avantages de légèreté, de fiabilité et de sécurité que les muscles artificiels susmentionnés mais présentant en outre un débattement important.

Pour atteindre cet objet, la présente invention prévoit un système de déplacement pneumatique d'un câble tendu en boucle entre au moins deux poulies, comprenant au moins un "muscle artificiel" inséré sur une portion de la boucle, la longueur de ce muscle artificiel variant selon qu'il est ou non sous pression, un moyen pour mettre sous pression ou non le muscle artificiel, et des moyens pour bloquer alternativement deux desdites poulies dans au moins un sens de rotation.

Selon un mode de réalisation de la présente invention, le système comprend un seul muscle artificiel disposé sur une branche de la boucle et un câble élastique.

Selon un mode de réalisation de la présente invention, le système comprend plusieurs muscles artificiels en série disposés sur la même branche de la boucle.

Selon un mode de réalisation de la présente invention, le système comprend au moins deux muscles artificiels respectivement situés de part et d'autre d'une poulie, et des moyens pour mettre sous pression de façon complémentaire lesdits muscles artificiels au rythme auquel les poulies sont bloquées et débloquées. Le câble est élastique.

Selon un mode de réalisation de la présente invention, un dispositif à déplacer est directement lié au câble.

Selon un mode de réalisation de la présente invention, un dispositif à déplacer est lié au câble par l'intermédiaire d'un système de renvoi à poulie.

Selon un mode de réalisation de la présente invention, au moins l'une des poulies est liée à un point fixe par l'intermédiaire d'un moyen élastique.

Ces objets, caractéristiques et avantages, ainsi que d'autres de la présente invention seront exposés en détail dans la description suivante de modes de réalisation particuliers faite à titre non-limitatif en relation avec les figures jointes parmi lesquelles :
les figures 1A à 1H représentent des phases successives de fonctionnement d'un dispositif selon un premier mode de réalisation de la présente invention ; et
les figures 2A à 2H représentent des phases successives de fonctionnement d'un dispositif selon un deuxième mode de réalisation de la présente invention.

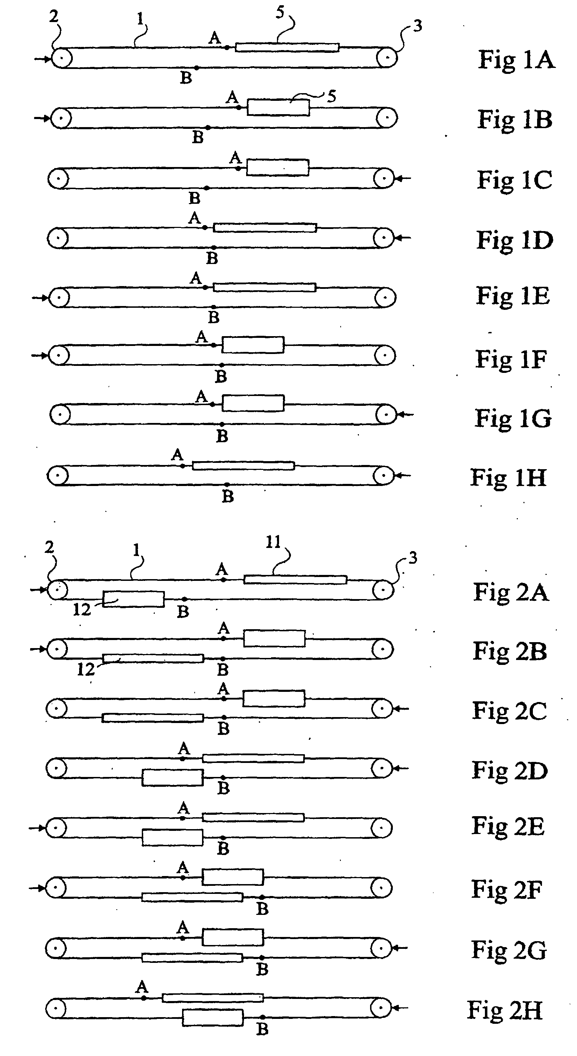

La figure 1A représente très schématiquement un premier mode de réalisation d'un système de déplacement pneumatique selon la présente invention. Ce système comporte un câble, fil, bande ou sangle tendu en boucle fermée entre deux poulies 2 et 3. Chacune des poulies est associée à un système de blocage commandable à distance, par exemple un frein pneumatique ou une roue à rochet à cliquet de blocage amovible, le cliquet étant commandable de façon pneumatique ou par un électroaimant. Dans la boucle constituée par le câble 1 est inséré un muscle artificiel 5 tel que défini précédemment. On notera qu'il peut s'agir d'un système de blocage uni ou bidirectionnel. En figure 1A, ce muscle est représenté en position dilatée, ce qui correspond par exemple à son état sous faible pression. On a indiqué par la référence A un point voisin d'une extrémité du muscle artificiel 5 et par la référence B un point situé sur l'autre branche de la boucle. On a représenté par une flèche le fait que la poulie 2 est bloquée (ou n'autorise les rotations que dans le sens inverse des aiguilles d'une montre) . On suppose également que le câble 1 présente une certaine élasticité. Ainsi, dans l'état représenté en figure 1, ce câble présente une première tension.

A la figure 1B, on a représenté la même structure, la poulie 2 étant toujours bloquée et la poulie 3 toujours libre mais le muscle artificiel 5 étant à l'état contracté. La tension du câble augmente vers une deuxième valeur de tension. Le point A se déplace vers la droite et le point B se déplace également vers la droite.

A l'étape de la figure 1C, le muscle est maintenu à l'état contracté mais cette fois-ci, c'est la poulie 3 qui est bloquée et la poulie 2 qui est libre. Rien ne change dans le déplacement des divers points du câble qui reste dans le deuxième état de tension.

A l'étape de la figure 1D, la poulie 3 étant toujours bloquée, le muscle artificiel est dilaté : le point A se déplace vers la gauche et le point B se déplace vers la droite.

Aux étapes des figures 1E et 1F, c'est la poulie 2 qui est bloquée et la poulie 3 qui est libre. A l'étape de la figure 1E, rien n'a été modifié. A l'étape de la figure 1F, le muscle artificiel a été contracté. Le point A s'est déplacé vers la droite et le point B aussi.

Aux étapes des figures 1G et 1H, c'est la poulie 3 qui est bloquée et la poulie 2 qui est libérée. A la figure 1G, rien n'a été modifié. A la figure 1H, le muscle artificiel a été dilaté, le point A s'est déplacé vers la gauche et le point B s'est déplacé vers la droite.

On voit donc qu'en alternant les blocages des poulies 2 et 3 et en provoquant au même rythme des contractions et des dilatations du muscle artificiel, les points de la boucle tournent dans le sens inverse des aiguilles d'une montre. Le point B tourne régulièrement tandis que le point A avance et recule, les avancées étant plus importantes que les reculs. Bien entendu, le sens de rotation pourrait être inversé si l'on procédait au passage d'un état dilaté à un état contracté tandis que la poulie 3 et non pas la poulie 2 est bloquée.

En considérant qu'on veut déplacer un élément lié au point B, on pourra modifier la vitesse de déplacement de cet élément en modifiant la fréquence des commutations entre les états bloqués et libres des deux poulies, et corrélativement la fréquence des commutations dilaté/contracté du muscle 5. Pour un muscle artificiel donné, on pourra modifier l'amplitude des déplacements incrémentiels en modifiant la différence entre les pressions maximum et minimum fournies pour obtenir les états contracté et dilaté. On pourra aussi disposer en série plusieurs muscles artificiels sur une même bande.

Le système peut être à fonctionnement continu en prévoyant que le muscle artificiel 5 peut, comme le câble 1, tourner autour de chacune des poulies. Dans ce dernier cas, on préférera utiliser dès systèmes à au moins deux muscles artificiels en série, un seul muscle étant commuté à un instant donné, et le muscle tournant autour d'une poulie étant inhibé tandis qu'il se trouve autour de celle-ci.

Un système selon l'invention se prête facilement à une commande à une fréquence de l'ordre de 10 coups par seconde, ce qui correspond, si le débattement de chaque muscle est de l'ordre de 2 cm, à une vitesse de 20 cm/s. Cette vitesse est tout à fait compatible avec de très nombreuses applications, notamment avec des applications de type télémanipulation. On pourra également prévoir qu'une alimentation pneumatique commune est utilisée pour le gonflage/dégonflage des muscles artificiels et pour la commande d'arrêt/blocage des poulies. Des électrovannes pourront être prévues pour être reliées à ces divers éléments, ces électrovannes étant éventuellement pilotées par un ordinateur.

La figure 2A représente un deuxième mode de réalisation de la présente invention dans un premier état. On retrouve un câble 1 entre des poulies 2 et 3 qui peuvent être alternativement bloquées (blocage bidirectionnel). Deux muscles artificiels 11 et 12 sont disposés sur les branches opposées de la boucle. Ces deux muscles sont dilatés et contractés en opposition. Par exemple, le muscle 11 est dilaté quand la poulie 2 est bloquée et le muscle 12 est dilaté quand la poulie 3 est bloquée. Dans la phase comprise entre les figures 2A et 2B, la poulie 2 est bloquée, le muscle 11 est contracté et le muscle 12 est dilaté. Dans cette phase, la partie du câble comprise entre la poulie bloquée et chacun des muscles artificiels reste immobile (point A), et la partie du câble comprise entre la poulie libre et chacun des muscles artificiels (point B) se déplace dans le sens inverse des aiguilles d'une montre. Dans ce mode de réalisation, le fonctionnement du système ne nécessite pas que le câble soit élastique bien que l'on puisse choisir un câble légèrement élastique pour d'autres raisons.

Dans la phase comprise entre les états représentés aux figures 2C et 2D, le point A se déplace dans le sens inverse des aiguilles d'une montre tandis que le point B reste fixe. Des phases successives de déplacement sont illustrées en figures 2E à 2H. On voit que, contrairement au cas du premier mode de réalisation, il n'existe pas de phases dans lesquelles un point donné du câble recule. Chacun des points ou bien avance ou bien reste fixe à chaque étape. Ceci peut constituer un avantage dans de nombreuses applications.

Les diverses variantes décrites en relation avec la figure 1 s'appliqueront également au mode de réalisation de la figure 2 quant aux façons de modifier la vitesse de rotation du câble, de modifier l'amplitude des incréments élémentaires, et de multiplier ou non le nombre d'éléments. En outre, dans le système de la figure 2, dans lequel des muscles artificiels fonctionnent en opposition, on pourra prévoir des moyens de conservation d'énergie utilisant partiellement l'énergie stockée dans un muscle gonflé pour participer au gonflage d'un muscle dégonflé tandis que le premier muscle doit passer l'état dégonflé. On pourra également prévoir que l'un des muscles varie entre deux pressions hautes, par exemple cinq fois et quatre fois la pression atmosphérique tandis qu'un autre varie entre deux pressions intermédiaires, par exemple deux fois et une fois la pression atmosphérique. Ceci peut faciliter les transferts d'énergie d'un muscle à l'autre.

La présente invention pourra être appliquée à de nombreux systèmes dans lequel on veut réaliser un déplacement. mécanique. L'élément à déplacer peut être lié directement ou indirectement au câble 1 du premier ou deuxième mode de réalisation de l'invention.

Selon une variante de l'invention, des poulies supplémentaires pourront être ajoutés pour modifier le parcours du câble et le trajet de l'élément à déplacer ou pour faciliter ce trajet.

Selon un avantage de la présente invention, dans le cas où le câble 1 est élastique, le système permet de limiter la contrainte maximale qui peut être appliquée à l'élément entraîné, ce qui assure une fonction de sécurité souvent souhaitable dans des applications médicales.

On pourra également prévoir que les poulies extrêmes, au lieu d'être montées sur des points fixes, sont montées sur ces points par l'intermédiaire d'éléments élastiques tels que des ressorts. Sinon, on pourra prévoir que l'élément lié au câble en rotation est associé à ce câble par l'intermédiaire d'un système à poulie de renvoi qui assure l'élasticité souhaitée.

A titre d'exemple d'application dans le domaine médical, un ou plusieurs systèmes selon la présente invention pourront être utilisés pour déplacer et positionner un dispositif de diagnostic ou un dispositif thérapeutique sur le corps humain, la liaison par câble procurant pour ce type d'application l'avantage d'une grande souplesse de mise en oeuvre.

## Revendications

1. Système de déplacement pneumatique d'un câble (1) tendu en boucle entre au moins deux poulies (2, 3), **caractérisé en ce qu'**il comprend :
au moins un "muscle artificiel" (5 ; 11, 12) inséré sur une portion de la boucle, la longueur de ce muscle artificiel variant selon qu'il est ou non sous pression,
un moyen pour mettre sous pression ou non le muscle artificiel, et
des moyens pour bloquer alternativement deux desdites poulies dans au moins un sens de rotation.

2. Système selon la revendication 1, **caractérisé en ce qu'**il comprend un seul muscle artificiel (5) disposé sur une branche de la boucle et **en ce que** le câble est élastique.

3. système selon la revendication 1, **caractérisé en ce qu'**il comprend plusieurs muscles artificiels en série disposés sur la même branche de la boucle.

4. Système selon la revendication 1, **caractérisé en ce qu'**il comprend au moins deux muscles artificiels (11, 12) respectivement situés de part et d'autre d'une poulie, et des moyens pour mettre sous pression de façon complémentaire lesdits muscles artificiels au rythme auquel les poulies sont bloquées et débloquées.

5. Système selon la revendication 4, **caractérisé en ce que** le câble est élastique.

6. Système selon la revendication 1, **caractérisé en ce qu'**un dispositif à déplacer est directement lié au câble.

7. Système selon la revendication 1, **caractérisé en ce qu'**un dispositif à déplacer est lié au câble par l'intermédiaire d'un système de renvoi à poulie.

8. Système selon l'une quelconque des revendications 1 à 7, **caractérisé en ce qu'**au moins l'une des poulies est liée à un point fixe par l'intermédiaire d'un moyen élastique.

## Claims

1. A system of pneumatic displacement of a cable (1) stretched in a loop between at least two pulleys (2, 3), **characterized in that** it includes:
at least one "artificial muscle" (5; 11, 12) inserted on a portion of the loop, the length of this artificial muscle varying according to whether it is or not under pressure,
a means for putting or not the artificial muscle under pressure, and
means for alternately blocking two of said pulleys in at least one rotation direction.

2. The system of claim 1, **characterized in that** it includes a single artificial muscle (5) arranged on a branch of the loop and **in that** the cable is resilient.

3. The system of claim 1, **characterized in that** it includes several artificial muscles in series arranged on the same branch of the loop.

4. The system of claim 1, **characterized in that** it includes at least two artificial muscles (11, 12) respectively located on either side of a pulley, and means for putting under pressure in a complementary manner said artificial muscles at the rate at which the pulleys are blocked and unblocked.

5. The system of claim 4, **characterized in that** the cable is resilient.

6. The system of claim 1, **characterized in that** a device to be moved is directly linked to the cable.

7. The system of claim 1, **characterized in that** a device to be moved is linked to the cable via a pulley transmission system.

8. The system of any of claims 1 to 7, **characterized in that** at least one of the pulleys is linked to a fixed point via a resilient means.

## Patentansprüche

1. Pneumatisches Stellsytem für ein Kabel (1), das in einer Schleife zwischen zumindest zwei Rollen (2, 3) gespannt ist, **dadurch gekennzeichnet, dass** es aufweist:
zumindest einen "künstlichen Muskel" (5; 11, 12), der in einen Bereich der Schleife eingefügt ist, wobei die Länge dieses künstlichen Muskels variiert, je nachdem ob er unter Druck oder nicht unter Druck steht,
eine Einrichtung, um den künstlichen Muskel unter Druck oder nicht unter Druck zu setzen, und
Einrichtungen, um alternativ zwei der Rollen in zumindest einem Rotationssinn zu blockieren.

2. System nach Anspruch 1, **dadurch gekennzeichnet, dass** es einen einzigen künstlichen Muskel (5) aufweist, der in einem Zweig der Schleife angeordnet ist, und dass das Kabel elastisch ist.

3. Sytem nach Anspruch 1, **dadurch gekennzeichnet, dass** es mehrere künstliche Muskeln aufweist, die in Serie auf dem gleichen Zweig der Schleife angeordnet sind.

4. System nach Anspruch 1, **dadurch gekennzeichnet, dass** es zumindest zwei künstliche Muskeln (11, 12), die jeweils auf beiden Seiten einer Rolle angeordnet sind, und Einrichtungen aufweist, um die künstlichen Muskeln in komplementärer Weise in einem Rhythmus unter Druck zu setzen, mit dem die Rollen blockiert und entsperrt werden.

5. System nach Anspruch 4, **dadurch gekennzeichnet, dass** das Kabel elastisch ist.

6. System nach Anspruch 1, **dadurch gekennzeichnet, dass** eine zu verstellende Vorrichtung direkt mit dem Kabel verbunden ist.

7. System nach Anspruch 1, **dadurch gekennzeichnet, dass** eine zu verstellende Vorrichtung mit dem Kabel unter Zwischenschaltung eines Rollengetriebesystemes verbunden ist.

8. System nach einem der Ansprüche 1 bis 7, **dadurch gekennzeichnet, dass** zumindest eine der Rollen mit einem festen Punkt unter Zwischenschaltung einer elastischen Einrichtung verbunden ist.
